# EUROPEAN PATENT APPLICATION

(11) **EP 4 644 182 A1**
(43) Date of publication of application: **05.11.2025**
(21) Application number: 23911772.4
(22) Date of filing: 15.12.2023
(51) Int. Cl.: B60Q 1/14

(54) **VEHICLE LAMP FITTING, CONTROLLER FOR VARIABLE LIGHT DISTRIBUTION LAMP AND METHOD FOR CONTROLLING SAME, AND SOFTWARE PROGRAM**

(30) Priority: 28.12.2022 JP 2022211442
(71) Applicant: Koito Manufacturing Co., Ltd., Shinagawa-ku, Tokyo 141-0001 (JP)
(72) Inventor: SAWADA Hirotaka, Shizuoka-shi Shizuoka 424-8764 (JP); MURAMATSU Takao, Shizuoka-shi Shizuoka 424-8764 (JP); NODA Keisuke, Shizuoka-shi Shizuoka 424-8764 (JP)
(74) Representative: Algemeen Octrooi- en Merkenbureau B.V.
(86) International application number: PCT/JP2023/044994
(87) International publication number: WO 2024/142991

(57) **Abstract**

A variable light distribution lamp 110 has a plurality of independently luminance-controllable pixels 112. The variable light distribution lamp 110 is structured to illuminate an area 10 for high beam light distribution, with a first beam BM1 ascribed to luminance distribution of the plurality of pixels 112. A controller 130 is structured to receive, from a vehicle in a high beam mode, shade information that represents a left end position and a right end position in a horizontal direction of an area to be shaded, and to turn off at least one pixel, among the plurality of pixels, which is above a reference line and between the left end and the right end.

## Description

### TECHNICAL FIELD

The present disclosure relates to a vehicle lamp apparatus.

### BACKGROUND ART

Many of vehicle lamp apparatuses are designed to be switchable between low beam illumination and high beam illumination. The low beam illumination aims to illuminate a nearby area of an own vehicle with a predetermined illuminance, whose light distribution is regulated by law so as not to cause glare to oncoming vehicle or preceding vehicle, and is mainly used during travel in an urban area. On the other hand, the high beam illumination aims to illuminate a wide and far front area with a relatively high illuminance, and is mainly used during high-speed travel on a road with less traffic of oncoming vehicle or preceding vehicle. The high beam illumination, which is superior to the low beam illumination in terms of visibility by the driver, has however suffered from a problem of causing glare to vehicle driver or pedestrian ahead of the own vehicle.

There is a recent proposal on adaptive driving beam (ADB) technology for dynamically and adaptively controlling a high beam light distribution pattern, with reference to surrounding state of the vehicle. The ADB technology is designed to detect the preceding vehicle and the oncoming vehicle (collectively referred to as front vehicles), or the pedestrian ahead of the own vehicle, and to dim an area that corresponds to the vehicles or the pedestrian, so as to reduce the glare possibly given to the vehicles or the pedestrian.

### RELATED-ART LITERATURE

### PATENT LITERATURE

Patent Literature 1: WO 2021-182151 A1
Patent Literature 2: WO 2021-200701 A1

### SUMMARY OF INVENTION

### TECHNICAL PROBLEM

The ADB control has been advanced towards higher resolution, with use of an LED array, or a spatial light modulator such as DMD or liquid crystal. The high-resolution ADB control is designed to detect the preceding vehicle with use of a camera or a sensor such as LiDAR, to control a shading area.

More specifically, the control creates information that represents a region in which the preceding vehicle resides (referred to as vehicle region of interest (ROI) information), with reference to a sensor output. For example, the vehicle ROI information contains angle information that represents the left end of the vehicle body of the preceding vehicle, and angle information that represents the right end of the same for the horizontal direction, meanwhile contains angle information that represents the top end of the vehicle body, and angle information that represents the bottom end of the same for the vertical direction. An ADB headlamp forms a shading area with reference to the vehicle ROI information.

The present inventors examined the ADB control, to find a problem below. The vehicle ROI information is relatively stable in the horizontal direction. On the other hand, it is difficult to make the vehicle ROI information in the vertical direction completely adaptive to the preceding vehicle, since the own vehicle with the headlamp mounted thereon vibrates about the pitch axis, occasionally vibrating up and down while keeping a width between the top end and the bottom end unchanged, or varying the width between the top end and the bottom end. Shading control based on such unstable vehicle ROI information would exert bother on the driver of the own vehicle or other vehicle.

The present disclosure has been arrived at in consideration of such circumstances, and one exemplary embodiment thereof is to provide a vehicle lamp apparatus capable of reducing bother felt by human due to the ADB control.

### SOLUTION TO PROBLEM

A vehicle lamp apparatus according to one embodiment of the present disclosure includes: a variable light distribution lamp having a plurality of individually luminance-controllable pixels, and being structured to illuminate an area for high beam light distribution, with a first beam ascribed to luminance distribution of the plurality of pixels; and a controller structured to receive, from a vehicle in a high beam mode, shade information that represents a left end position and a right end position in a horizontal direction of an area to be shaded, and to turn off at least one pixel, among the plurality of pixels, which is above a horizontal reference line that coincides with a horizontal cutoff line or set close to the horizontal cutoff line, and also is between the left end and the right end.

Another embodiment of the present disclosure relates to a controller for controlling an adaptive driving beam apparatus. The variable light distribution lamp has a plurality of independently luminance-controllable pixels, and is structured to illuminate an area for high beam light distribution, with a first beam ascribed to luminance distribution of the plurality of pixels. The controller has: an interface circuit structured to receive, from a vehicle in a high beam mode, shade information that represents a left end position and a right end position in a horizontal direction of an area to be shaded; and a processing unit structured to turn off at least one pixel, among the plurality of pixels, which is above a horizontal reference line that coincides with a horizontal cutoff line or set close to the horizontal cutoff line, and also is between the left end and the right end.

Note that also free combinations of these constituents, and also any of the constituents and expressions exchanged among the method, apparatus, and system, are valid as the modes of the present disclosure. Also note that the description of this section (SOLUTION TO PROBLEM) does not describe all essential features of the invention, and thus also subcombinations of these features described may constitute the invention.

### ADVANTAGEOUS EFFECTS OF INVENTION

One embodiment of the present disclosure can reduce the bother felt by human due to the ADB control.

### BRIEF DESCRIPTION OF DRAWINGS

[Fig. 1] Fig. 1 is a block diagram of a lamp system according to Embodiment 1.
[Fig. 2] Fig. 2 is a diagram illustrating formation of a low beam light distribution by the lamp system illustrated in Fig. 1.
[Fig. 3] Fig. 3 is a diagram illustrating an exemplary travel scene.
[Fig. 4] Fig. 4 is a diagram for explaining light distribution control in a high beam mode that corresponds to the travel scene illustrated in Fig. 3.
[Fig. 5] Fig. 5 is a block diagram illustrating a lamp system according to Embodiment 2.
[Fig. 6] Fig. 6 is a diagram for explaining control of low beam light distribution, according to fluctuation of pitch angle θp.

### DESCRIPTION OF EMBODIMENTS

### (Outline of Embodiments)

Some exemplary embodiments of the present disclosure will be outlined. This outline is intended for briefing some concepts of one or more embodiments, for the purpose of basic understanding of the embodiments, as an introduction before detailed description that follows, without limiting the scope of the invention or disclosure. Also note this outline is not an extensive overview of all possible embodiments, and is therefore not intended to limit any constituent indispensable for the embodiments. For convenience, the wording "one embodiment" may be used to designate a single embodiment (Example or Modified Example), or a plurality of embodiments (Examples or Modified Examples) disclosed in the present specification.

A vehicle lamp apparatus according to one embodiment includes: a variable light distribution lamp having a plurality of individually luminance-controllable pixels, and being structured to illuminate an area for high beam light distribution, with a first beam ascribed to luminance distribution of the plurality of pixels; and a controller structured to receive, from a vehicle in a high beam mode, shade information that represents a left end position and a right end position in a horizontal direction of an area to be shaded, and to turn off at least one pixel, among the plurality of pixels, which is above a horizontal reference line that coincides with a horizontal cutoff line or set close to the horizontal cutoff line, and also is between the left end and the right end.

With the left end and the right end of the shade area controlled according to the vehicle ROI information which is relatively stable, and with the bottom end of the shade area fixed to the reference line, it now becomes possible to reduce the bother possibly exerted on the driver of the own vehicle or the driver/passenger of other vehicle.

In one embodiment, the shade information may designate the top end and the bottom end of the area to be shaded, in addition to the right end and the left end. The controller in this case may only ignore the information regarding the top end and the bottom end.

In one embodiment, the vehicle lamp apparatus may further have a fixed light distribution lamp structured to illuminate an area that contains the bottom end of the low beam light distribution, with a second beam having a fixed light distribution.

In one embodiment, the controller may vary the level of height of the reference line, according to a pitch angle of the vehicle body. With this structure, glare in case of vehicle sink on the rear side (nose-up) may be prevented, by descending the horizontal cutoff line, meanwhile far field of view in case of vehicle sink on the front side (nose-dive) may be prevented from dimming, by elevating the cutoff line. In addition, with the control made adaptive to dynamic changes in the pitch angle of the vehicle body, the level of the cutoff line may be kept constant on a virtual perpendicular screen ahead of the vehicle, even if the vehicle body causes front-rear vibration, thereby preventing an object ahead of the vehicle from being looked bright and dark, and thus successfully providing an improved field of view.

A controller according to one embodiment has: an interface circuit structured to receive, from a vehicle in a high beam mode, shade information that represents a left end position and a right end position in a horizontal direction of an area to be shaded; and a processing unit structured to turn off at least one pixel, among the plurality of pixels, which is above a horizontal reference line that coincides with a horizontal cutoff line or set close to the horizontal cutoff line, and also is between the left end and the right end.

One embodiment relates to a software program product for controlling a variable light distribution lamp. The variable light distribution lamp has a plurality of pixels whose luminance is controllable according to image data, and is structured to illuminate an area for high beam light distribuion, with a first beam ascribed to luminance distribution of the plurality of pixels. The software program product is structured to cause a processing unit: to acquire, from a vehicle in a high beam mode, shade information that represents a left end position and a right end position in a horizontal direction of an area to be shaded; and to generate the image data that specifies the luminance distribution of the plurality of pixels. At least one pixel in the image data, which is above a horizontal reference line and between the left end and the right end, has a value that corresponds to the off state. The horizontal reference line coincides with a horizontal cutoff line or is set close to the horizontal cutoff line.

### (Embodiments)

Preferred embodiments will be explained below, referring to the attached drawings. All similar or equivalent constituents, members and processes illustrated in the individual drawings will be given same reference signs, so as to properly avoid redundant explanations. The embodiments are merely illustrative, and are not restrictive about the disclosure. All features and combinations thereof described in the embodiments are not always essential to the disclosure.

### (Embodiment 1)

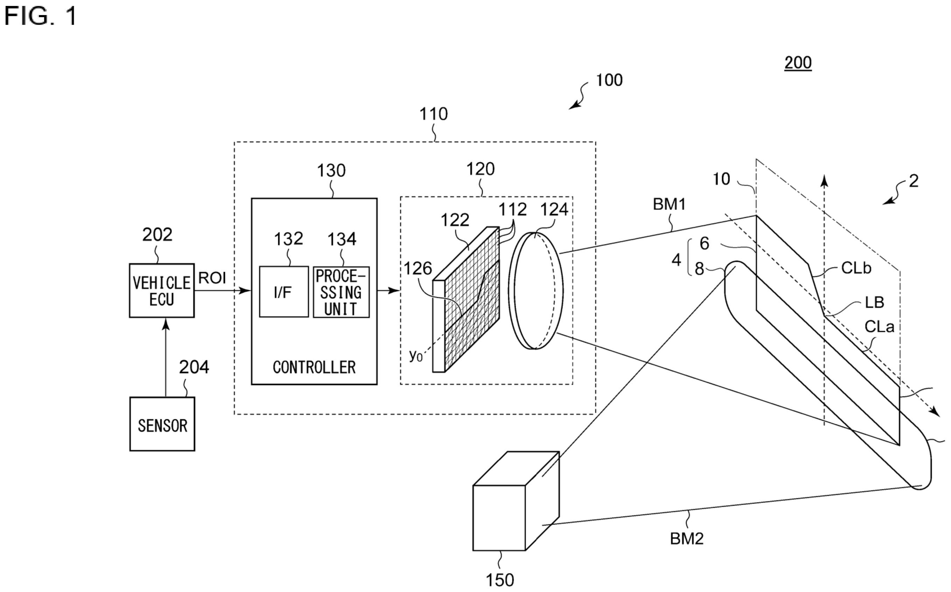

Fig. 1 is a block diagram illustrating a lamp system 200 of Embodiment 1. The lamp system 200 functions as a headlamp that is mounted on an automobile, and illuminates a field of view ahead of the vehicle. The lamp system 200 has an ADB function designed to shade an area where the oncoming vehicle and the preceding vehicle (collectively referred to as front cars, hereinafter) reside, according to a situation ahead of the vehicle in the high beam mode.

The lamp system 200 has a vehicle lamp apparatus 100, a vehicle ECU 202, and a sensor 204. The sensor 204 is typically a camera or LiDAR, structured to sense a situation ahead of the vehicle. The vehicle electronic control unit (ECU) 202 is structured to detect a car ahead based on an output from the sensor 204, and to generate vehicle ROI information (referred to as ROI information, hereinafter) that represents a region where the car ahead resides, in other words, a region where the shade area is to be formed. The ROI information contains at least a left end position and a right end position of the shade area. The ROI information may further contain a top end and a bottom end position of the shade area. The position information is usually represented by angle.

The ROI information is transmitted from the vehicle ECU 202, through a vehicle bus such as controller area network (CAN) or local interconnect network (LIN), to the vehicle lamp apparatus 100. The vehicle lamp apparatus 100 conducts the ADB control with use of the ROI information during the high beam illumination.

The vehicle lamp apparatus 100 has a variable light distribution lamp 110 and a fixed light distribution lamp 150 and is switchable between the high beam illumination and the low beam illumination, depending on combination of these two lamps.

The variable light distribution lamp 110 and the fixed light distribution lamp 150 illuminate different areas. Fig. 1 schematically illustrates a virtual perpendicular screen 2, on which a low beam light distribution 4 is schematically illustrated. More specifically, the variable light distribution lamp 110 covers a rectangular area 10 indicated by an alternate long and short dash line. The rectangular area 10 is a planned area for the high beam light distribution. A first area 6, which occupies an upper part of the low beam light distribution containing the cutoff line CL, is contained in the rectangular area 10. The cutoff line CL contains a horizontal cutoff line CLa and an oblique cutoff line CLb, which intersect at an elbow point LB.

On the other hand, the fixed light distribution lamp 150 illuminates a second area 8, which occupies a lower part of the low beam light distribution 4, with a second bam BM2. The second area 8 is referred to as a diffused low beam light distribution. The first are 6 and the second area 8 are overlapped.

The variable light distribution lamp 110 has a high-definition lamp unit 120 and a controller 130. The high-definition lamp unit 120 contains a light-emitting element array 122, and an illumination optical system 124. The light-emitting element array 122 contains a plurality of pixels PIX arranged in a matrix. Luminance of the individual pixels PIX are independently controllable at multiple gradation levels. The light-emitting element array 122 usable herein may be an LED array.

The controller 130 controls the luminance of the plurality of pixels PIX of the light-emitting element array 122. The illumination optical system 124 projects an output light from the light-emitting element array 122, ahead of the vehicle. The illumination optical system 124 may be a lens optical system, a reflective optical system, or a combination of these systems.

Note that correspondence between a position of a certain pixel and an illumination area on the virtual perpendicular screen 2 ascribed to the pixel is determined by the illumination optical system 124, and may be occasionally given in a mirror image relation (left-right inversion), up-down inversion, or up-down and left-right inversion.

In the low beam mode, the controller 130 controls on/off of the plurality of pixels 112 in the light-emitting element array 122, so that the lower part of the first area 6 below the cutoff line CL is illuminated on the virtual perpendicular screen 2. More specifically, the controller 130 turns on the pixels below (or above) a line 126 that corresponds to the cutoff line and turns off the pixels above (or below) the line.

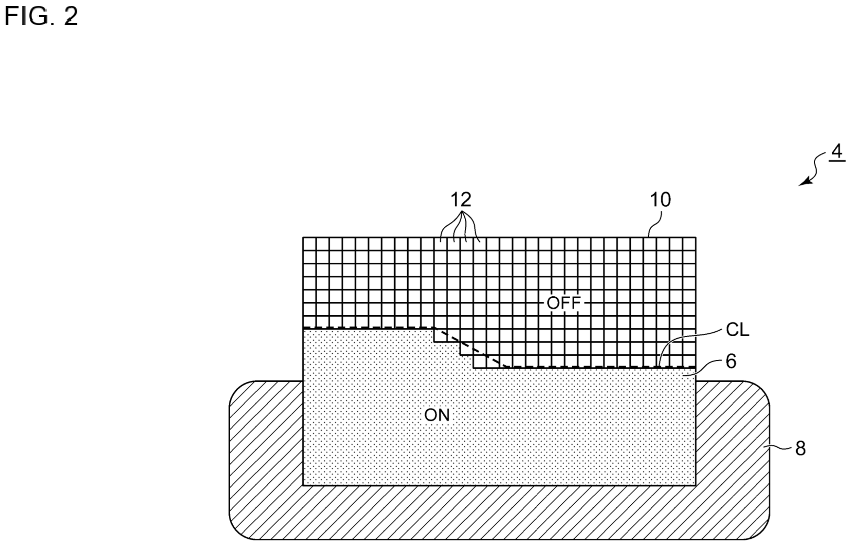

Fig. 2 is a diagram for explaining formation of the low beam light distribution 4 by the lamp system 200 illustrated in Fig. 1. A rectangle indicates the illumination region 10 by the variable light distribution lamp 110. The illumination region 10 is divided into a plurality of meshes (sub-regions) 12 that correspond to the plurality of pixels PIX. Illuminance of each mesh 12 is ascribed to the luminance of the corresponding pixel PIX.

With all the pixels of the light-emitting element array 122 turned on, all the meshes 12 in the illumination region 10 are illuminated with the first beam BM1. With a part of the pixels PIX of the light-emitting element array 122 turned off, the illuminance of the mesh 12 that corresponds to such pixel will be substantially zero. Note that the pixel PIX being turned off is not limited to a case where the luminance is zero, that is, a case where the illuminance of the corresponding mesh 12 is zero, but may include a case where the luminance is very small, that is, a case where the illuminance of the corresponding mesh 12 is not zero but is very small.

The controller 130 turns off the pixels corresponding to the meshes 12 above the cutoff line CL, meanwhile turns on the pixels corresponding to the meshes 12 below the cutoff line CL, to form the first area 6 that contains the cutoff line CL in the low beam light distribution 4.

Note that an area below the cutoff line CL in the first area 6 may have illuminance with a certain distribution, rather than with uniformity.

Returning now back to Fig. 1, the light distribution control in the high beam mode will be described.

The controller 130 includes an interface circuit 132 and a processing unit 134. The interface circuit 132 receives the ROI information from the vehicle ECU 202. The interface circuit 132 is typically a CAN interface. The ROI information contains a left end position H₁ and a right end position H₂ of the shade area. The processing unit 134 turns off the pixels that are positioned above a virtual reference line REFH that extends in the horizontal direction and are positioned between the left end H₁ and the right end H₂. Although all the remaining pixels might be kept turned on basically, those unnecessary for the high beam light distribution may be turned off. The reference line REFH may coincide with the horizontal cutoff line, for which the level of height is set to -0.57°. The interface circuit 132 and the processing unit 134 may be implemented as separate hardware, or as the same hardware.

In one embodiment, the processing unit 134 may be implemented by a combination of a software program product, and a processing unit on which the software program product is run. The processing unit may be a central processing unit (CPU), or a microcontroller. The software program product causes the processing unit to acquire, from a vehicle in a high beam mode, shade information that represents the left end position and the right end position in a horizontal direction of the shade area. The software program product also causes the processing unit to generate image data that specifies the luminance distribution of the plurality of pixels in the light emitting element array 122. The image data has a value that corresponds to an off state (zero, for example) assigned to at least one pixel, among the plurality of pixels, which is positioned above the reference line REFH, and also is positioned between the left end H₁ and the right end H₂.

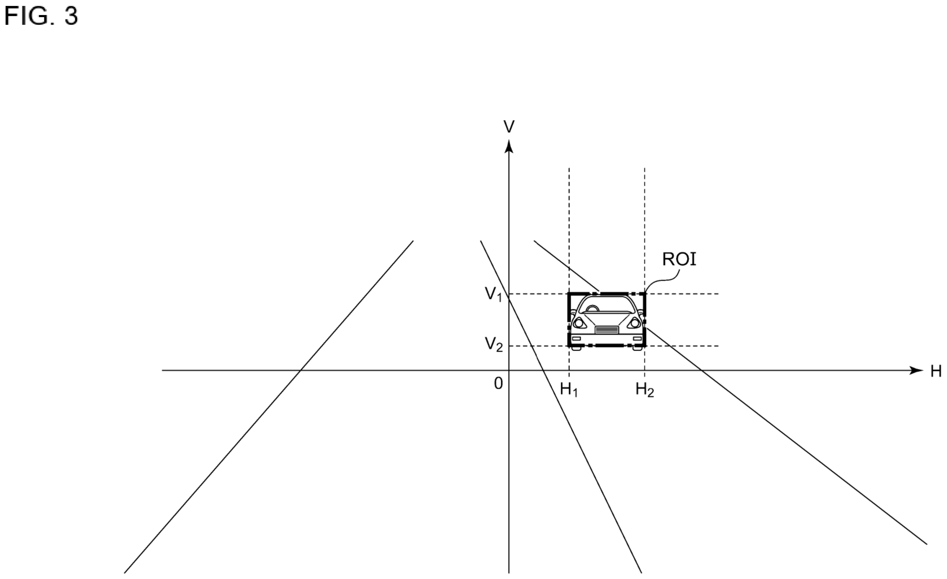

Fig. 3 is a drawing illustrating an exemplary travel scene. This example illustrates passing of an oncoming vehicle. The vehicle ECU 202 detects a part where the vehicle body of the oncoming vehicle resides, as the ROI. H₁ and H₂ represent the left end position and the right end position of the ROI, respectively, and V₁ and V₂ represents the top end position and the bottom end position of the ROI, respectively.

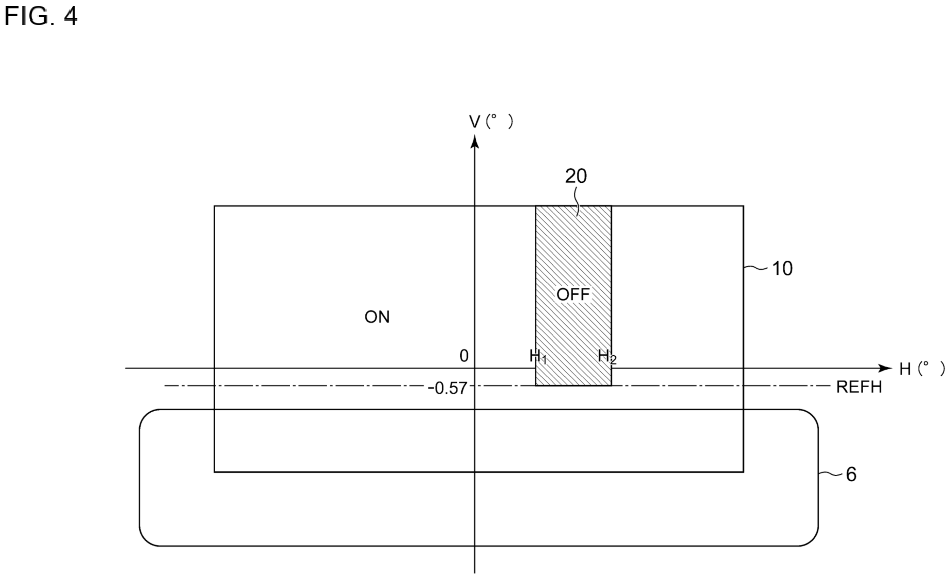

Fig. 4 is a diagram for explaining light distribution control in the high beam mode that corresponds to the travel scene illustrated in Fig. 3. The controller 130 turns off the pixels, among the plurality of pixels of the light-emitting element array 122, which are positioned above the reference line REFH that corresponds to the horizontal cutoff line (-0.57°), and also are between the left end H₁ and the right end H₂. A shade area 20 is thus formed in the illumination region 10 of the variable light distribution lamp 110. The bottom end of the shade area 20 always coincides with the horizontal cutoff line, regardless of coordinate V₂ of the ROI in the vertical direction V.

Operations of the vehicle lamp apparatus 100 have been described above. Next, the advantage will be described.

It is difficult to make the position information V₁, V₂ in the vertical direction completely adaptive to the front car, since the traveling vehicle vibrates about the pitch axis, occasionally vibrating up and down while keeping the width between the top end and the bottom end unchanged, or varying the width between the top end and the bottom end. The ADB control based on such unstable information would jiggle the shade area up and down, thus exerting bother on the driver or other traffic participants.

The vehicle lamp apparatus 100 according to the embodiment was designed to match the bottom end of the shade area 20 to the horizontal cutoff line in the ADB control for the high beam illumination, rather than using the top and bottom end positions V₁, V₂ of the unstable ROI. This successfully reduces the bother possibly exerted on the driver or other traffic participants, since the position of the shade area 20 is stabilized, even if the positions V₁, V₂ in the vertical direction of the ROI should vibrate.

### (Embodiment 2)

The automobile can vary the angle of inclination in the front-rear direction, depending on front-rear weight balance or vehicle motion. The angle of inclination in the front-rear direction corresponds to pitching about a horizontal axis (pitch axis) that extends in the left-right direction of the vehicle body, and is referred to as pitch angle θp.

A lamp system according to Embodiment 2 functions to automatically adjust the optical axis of the headlamp in the pitch direction, corresponding to the pitch angle θp (auto leveling function).

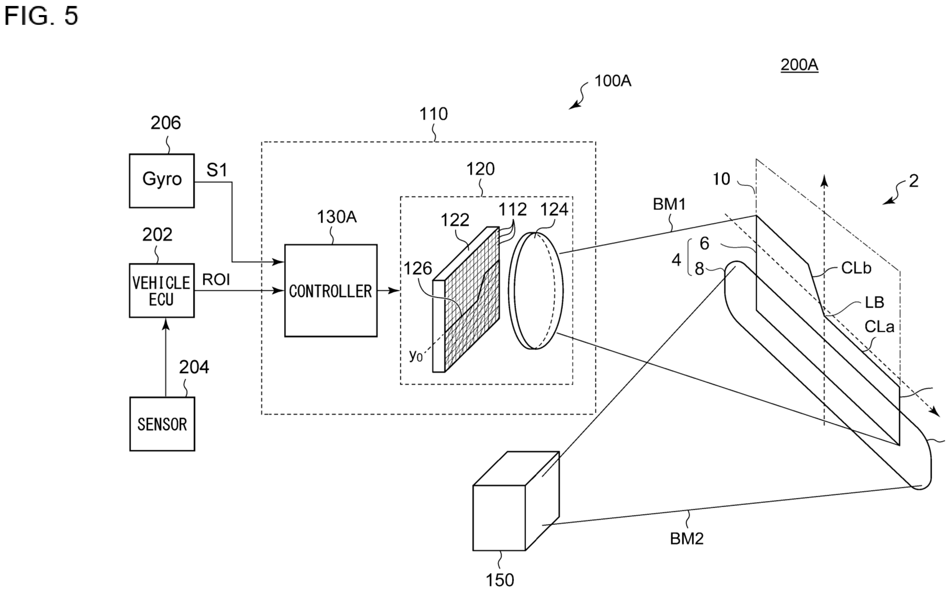

Fig. 5 is a block diagram illustrating a lamp system 200A according to Embodiment 2. The lamp system 200A has a vehicle lamp apparatus 100A, the vehicle ECU 202, the sensor 204, and an inclination sensor 206.

The inclination sensor 206 is structured to enable detection of an angle of rotation (pitch angle) about the pitch axis of the vehicle body. The controller 130 can generate a pitch angle θp of the vehicle body, with reference to an output S1 of the inclination sensor 206. For example, the inclination sensor 206 usable herein may be a gyro sensor. The controller 130 can generate the pitch angle θp, by integrating angular velocity ωp about the pitch axis generated by the gyro sensor. The inclination sensor 206 may be provided in a housing of the headlamp, or may be externally attached to the housing of the headlamp. The inclination sensor 206 may alternatively be provided to the vehicle body.

In this embodiment, the controller 130A corrects position of the cutoff line CL in the low beam light distribution 4 in a dynamic and adaptive manner, according to fluctuation of the pitch angle θp ascribed to various factors during stop and travel of the vehicle. More specifically, the controller 130A calculates the position of the cutoff line CL according to the pitch angle θp, and turns on the pixels below (or above) a line 126 that corresponds to the cutoff line, and turns off the pixels above (or below) the line.

Also in the high beam mode, the controller 130A corrects the level of height of the cutoff line CL according to fluctuation of the pitch angle θp, and sets the reference line REFH that corresponds to the corrected cutoff line CL, as the bottom end of the shade area.

The structure of the lamp system 200A has been described.

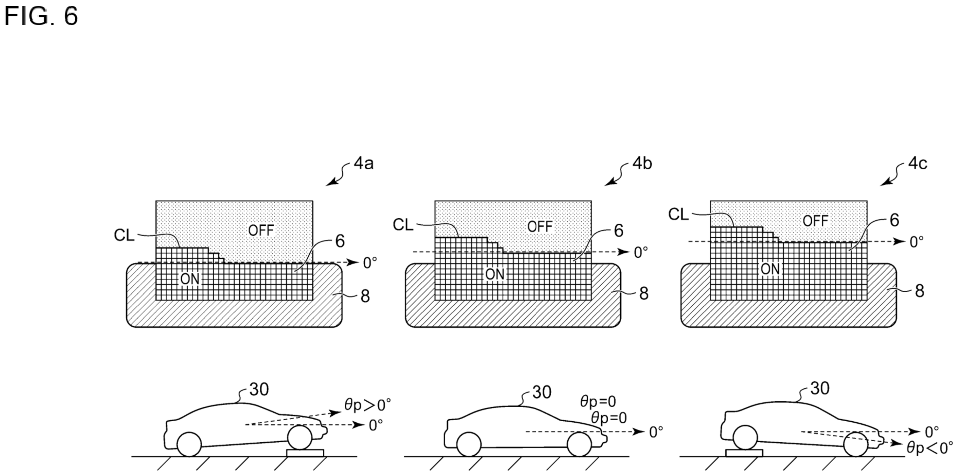

Fig. 6 is a diagram for explaining control of the low beam light distribution 4, according to fluctuation of the pitch angle θp. Fig. 6 illustrates, on the left thereof, a low beam light distribution 4a of the vehicle body 30 in a nose-up posture (θp > 0°). Fig. 6 illustrates, at the center thereof, a low beam light distribution 4b of the vehicle body 30 with no inclination (θp = 0°). Fig. 6 illustrates, on the right thereof, a low beam light distribution 4c of the vehicle body 30 in a nose-dive posture (θp < 0°). The numeral 0° indicates an angle horizontal to the road face. Shading in the diagram represents the illuminance of the individual meshes.

The second area 8 formed by the fixed light distribution lamp 150 shifts up and down as the pitch angle θp changes, relative to the horizontal level at 0°. Meanwhile, the first area 6 is formed by the variable light distribution lamp 110 so as to keep the level of height of the cutoff line CL close to the horizontal level at 0° (specifically, -0.57°) even if the pitch angle θp would change, for which the position of the boundary between the on-pixel region and the off-pixel region among the plurality of pixels PIX is controlled.

With this lamp system 200, the cutoff line CL is controlled so as to keep a substantially horizontal level, even if the vehicle body is in the nose-up or nose-dive posture. This successfully provides the driver with a good field of view.

This control is also effective in the high beam mode. Hence, the nose-up posture during high-beam driving causes lowering of the cutoff line CL, eventually lowering the bottom end of the shade area. This successfully suppresses exerting glare on the front car.

### (Modified Example)

Although the embodiments employed a gyro sensor as the inclination sensor 206, the present disclosure is not limited thereto. The inclination sensor 206 may alternatively be a pair of vehicle height sensors attached to the front and rear of the vehicle body.

The high-definition lamp unit 120 may be implemented by a combination of a light source, and a digital mirror device (DMD) structured to pattern the emitted light from the light source. Alternatively, the high-definition lamp unit 120 may be implemented by a combination of a light source, and a liquid crystal device structured to pattern the emitted light from the light source.

Although the reference line REFH that specifies the bottom end of the shade area has been matched with the horizontal cutoff line in the aforementioned embodiments, the present disclosure is not limited thereto. The reference line REFH may alternatively be set close to the horizontal cutoff line. For example, the reference line REFH may be set in the range given by V = -1° to 0°.

Having described the present disclosure with use of specific terms referring to the embodiments, the embodiments merely illustrate the principle and applications of the present disclosure, allowing a variety of modifications and layout change without departing from the spirit of the present disclosure specified by the claims.

### INDUSTRIAL APPLICABILITY

The present disclosure relates to a vehicle lamp apparatus.

### REFERENCE SIGNS LIST

200 lamp system, 202 vehicle ECU, 204 sensor, 206 inclination sensor, 100 vehicle lamp apparatus, 110 variable light distribution lamp, 120 high-definition lamp unit, 122 light emitting element array, 124 illumination optical system, PIX pixel, 130 controller, 132 interface circuit, 134 processing unit, 150 fixed light distribution lamp, BM1 first beam, BM2 second beam, 6 first area, 8 second area, 2 virtual perpendicular screen

## Claims

1. A vehicle lamp apparatus comprising:
a variable light distribution lamp having a plurality of individually luminance-controllable pixels, and being structured to illuminate an area for high beam light distribution, with a first beam ascribed to luminance distribution of the plurality of pixels; and
a controller structured to receive, from a vehicle in a high beam mode, shade information that represents a left end position and a right end position in a horizontal direction of an area to be shaded, and to turn off at least one pixel, among the plurality of pixels, which is above a horizontal reference line that coincides with a horizontal cutoff line or set close to the horizontal cutoff line, and also is between the left end and the right end.

2. The vehicle lamp apparatus according to claim 1, further comprising a fixed light distribution lamp structured to illuminate an area that contains a bottom end of the low beam light distribution, with a second beam having a fixed light distribution.

3. The vehicle lamp apparatus according to claim 1 or 2, wherein the controller is structured to vary a level of height of the reference line, according to a pitch angle of a vehicle body.

4. A controller for controlling a variable light distribution lamp, the variable light distribution lamp having a plurality of individually luminance-controllable pixels, and being structured to illuminate an area for high beam light distribution, with a first beam ascribed to luminance distribution of the plurality of pixels,
the controller comprising:
an interface circuit structured to receive, from a vehicle in a high beam mode, shade information that represents a left end position and a right end position in a horizontal direction of an area to be shaded; and
a processing unit structured to turn off at least one pixel, among the plurality of pixels, which is above a horizontal reference line that coincides with a horizontal cutoff line or set close to the horizontal cutoff line, and also is between the left end and the right end.

5. The controller according to claim 4, wherein the processing unit is structured to vary a level of height of the reference line, according to a pitch angle of a vehicle body.

6. A control method for a variable light distribution lamp, the variable light distribution lamp having a plurality of individually luminance-controllable pixels, and being structured to illuminate an area for high beam light distribution, with a first beam ascribed to luminance distribution of the plurality of pixels,
the control method comprising:
receiving, from a vehicle in a high beam mode, shade information that represents a left end position and a right end position in a horizontal direction of an area to be shaded; and
turning off at least one pixel, among the plurality of pixels, which is above a horizontal reference line that coincides with a horizontal cutoff line or set close to the horizontal cutoff line, and also is between the left end and the right end.

7. A software program product for a variable light distribution lamp, the variable light distribution lamp having a plurality of pixels whose luminance is controllable according to image data, and being structured to illuminate an area for high beam light distribution, with a first beam ascribed to luminance distribution of the plurality of pixels,
the software program product being structured to cause a processing unit:
to acquire, from a vehicle in a high beam mode, shade information that represents a left end position and a right end position in a horizontal direction of an area to be shaded; and
to generate the image data,
and wherein at least one pixel in the image data, which is above a horizontal reference line and between the left end and the right end, has a value that corresponds to the off state, the horizontal reference line coinciding with a horizontal cutoff line or being set close to the horizontal cutoff line.
